# EUROPEAN PATENT APPLICATION

(11) **EP 2 339 070 A1**
(43) Date of publication of application: **29.06.2011**
(21) Application number: 09180729.7
(22) Date of filing: 24.12.2009
(51) Int. Cl.: E01F 13/06

(54) **Connecting device for two rod segments**

(71) Applicant: NICE S.P.A., 31046 Oderzo (Treviso) (IT)
(72) Inventor: Galberti, Lorenzo, 31046 Oderzo (Treviso) (IT)
(74) Representative: Citron, Massimiliano

(57) **Abstract**

The invention describes a device (40) for connecting and locking two segments (26, 28) that form part of a hollow rod (24) used in road barriers, characterised in that it comprises mechanical means with variable geometry comprising two surfaces (36, 38) that are adjustably movable relative to one another to engage the ends of the two segments, thus rigidly locking them and joining them together.

## Description

The invention refers to a device for connecting two segments that form part of a liftable rod used in road barriers.

Road barriers are usually used as temporary barriers to vehicles or people, and they have one or more liftable rods suspended canti-levered from a tower/column, containing an actuator. The rods can be of substantial length, even 10 or 12 metres (industrial barriers). This is the case, for example, if the entire entrance of a large parking area or industrial area has to be occupied by the rod. In order to reduce its weight, it is generally made hollow.

It goes without saying that the production and transportation of such long rods is an expensive business and full of drawbacks. The obvious solution is to segment the rod and, during installation, then compose it entirely back together again.

The means that have been used up to now to fix together the rod segments are pins or joints that are slotted into two ends of the segments. In order to make the insertion of the joints and the assembly operations easier, the section of the joints does not perfectly match the internal section of the segments and leave a small clearance. If this clearance is essential during assembly, consider for example the influence of thermal dilations, overtime it causes a problem. Above all, the joint of the segment closest to the tower is subjected to the moment generated by the weight of the remaining rod, which due to the clearance tilts downwards. The result of the rod's own weight, the clearances at every segment and the various slackenings is that it arches downwards, giving a poor appearance and risking oscillations and/or anomalous and heavy stresses on the joints. It has to be noted that as time passes the rod arches more and more downwards.

In certain cases the joints have a complex shape, consisting of a central cylindrical pin to which radial discs are fixed having the same section as that of the rod segment. Of course, the disadvantage is having to manufacture the discs with high precision, so as to ensure the insertion without clearances in the rod segments, and using expensive materials that limit their own deformations over time.

Other more complex solutions exhibit telescopic rods, able to be inserted for a certain length into one another and able to be locked in position by screws. The disadvantage in this case is having to produce and store rod segments with different diameters, as well as having to ensure the precision of the diameters and the alignment of the attachment holes, with a clear production and storage cost.

The main object of the invention is to improve this scenario through an improved mounting device.

Another object of the invention is to propose a device that avoids a curvature of the rod due to clearances between the segments.

Another object of the invention is to ensure quick and simple assembly with respect to known devices.

Another object of the invention is to provide a device that is able to recover possible clearances formed in the rod segments even over time.

Such objects are obtained with a device according to claim 1.

Preferred embodiments of the invention are defined in the dependent claims.

The invention also refers to a rod comprising the device of the invention, integrated or not.

The characteristics and advantages of the invention shall become clearer from the example description of a device according to the invention, together with the attached drawings in which:
figure 1 shows a side view of a movable barrier with a liftable rod;
figure 2 shows a side view of a liftable rod of fig. 1;
figure 3 shows a section view of the rod in fig. 2 according to the plane III-III;

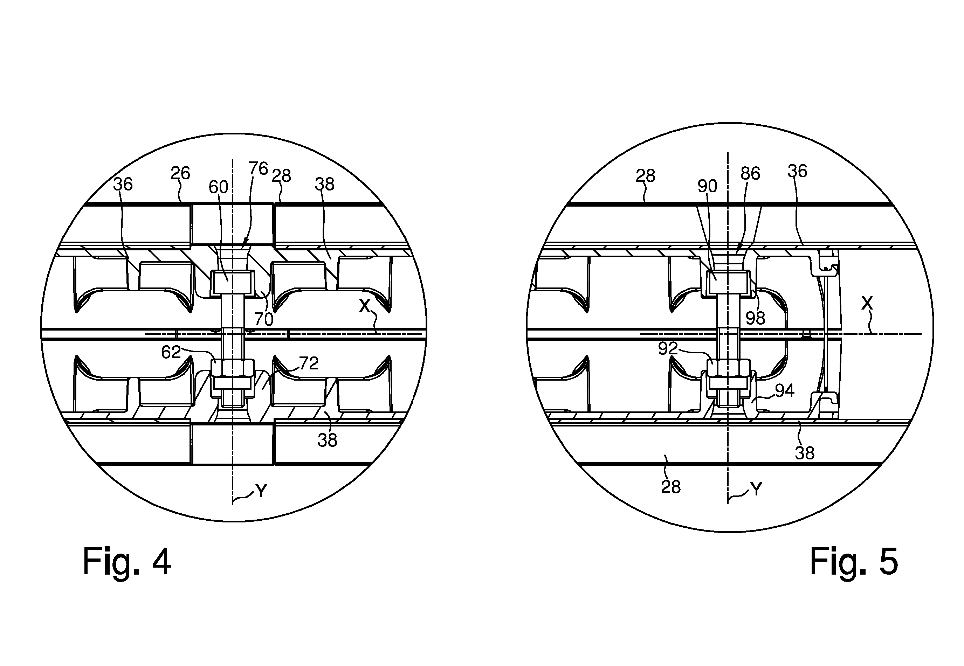

figure 4 shows an enlarged view of a detail in fig. 3 (left circle);
figure 5 shows an enlarged view of a detail in fig. 3 (right circle);

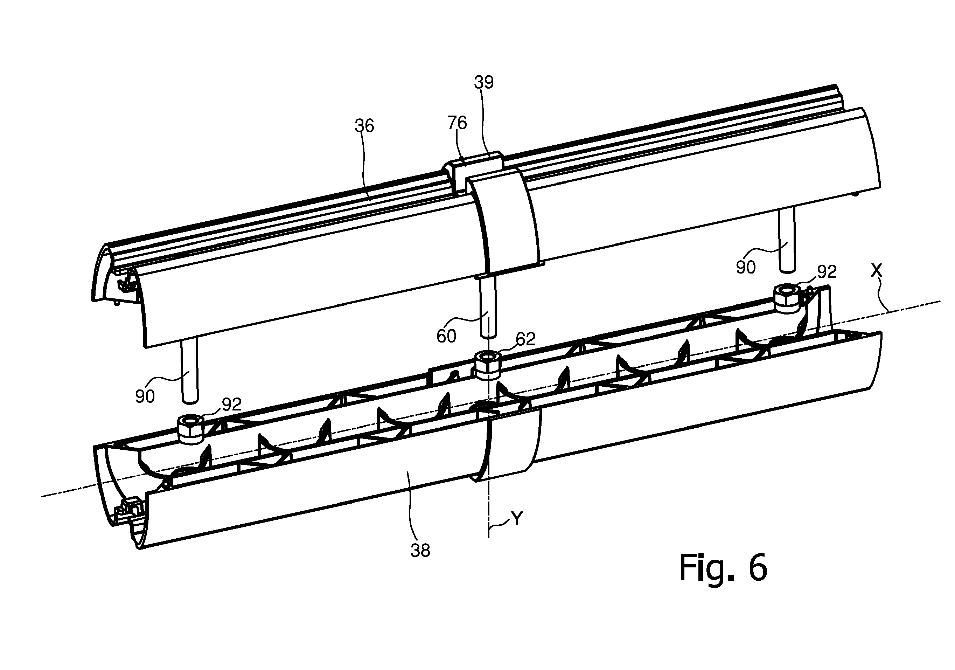

figure 6 shows a three-dimensional view of the device.

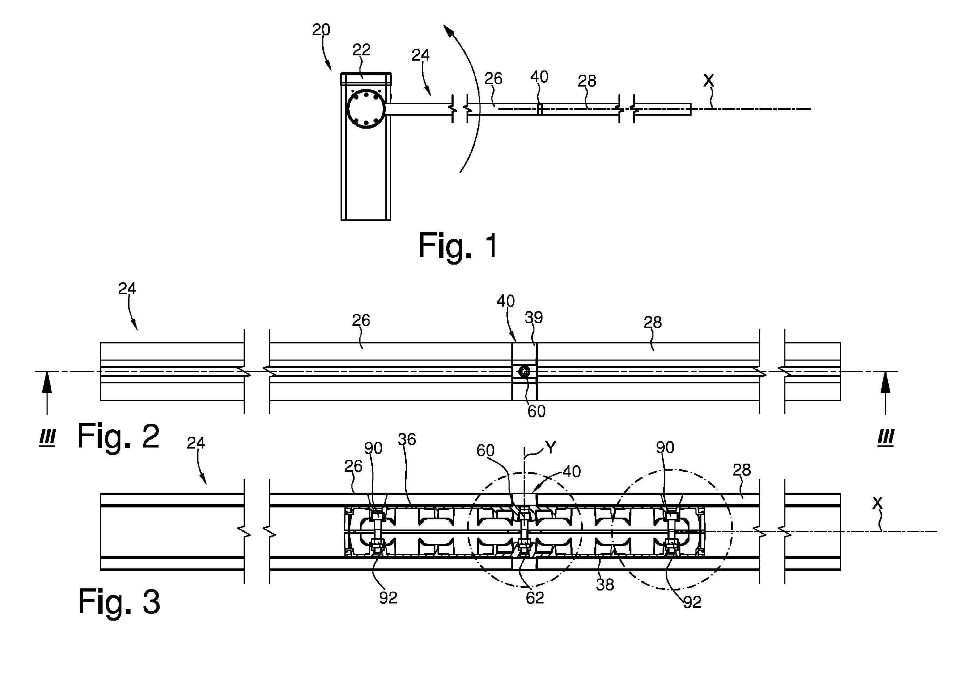

A road barrier 20 is made up of a support column 22 and a liftable rod 24 (see arrow in fig. 1), in turn made up of various hollow rectilinear segments, two of which are indicated with 26 and 28. The rod 24 extends along an axis X (in fig. 1 parallel to the ground).

Between each pair of segments there is a mutual locking and fastening device 40 (see fig. 2 and following) formed by two half-shells 36, 38 of elongated shape along the axis X and a suitable mechanism for the expansion and locking of the half-shells 36, 38. The two half-shells 36, 38 are parallel to one another, preferably have an outer perimetral shaping corresponding to the inner perimetral shape of the rod and can be inserted into a rod segment and into the adjacent one. The shape of the half-shells 36, 38 is such as to correspond to the inside of the segments for an excellent distribution of pressures and better hold. In the example the section of the half-shells 36, 38 is roughly half-ellipse shaped.

At the centre of every half-shell 36, 38 there is a raised abutment 39, on the sides of which it is possible for the ends of the segments to be joined to abut.

The half-shells 36, 38 can be moved apart along an axis Y perpendicular to the axis X through the expansion mechanism, which for this object comprises a central bolt 60 and a central nut 62 and two side bolts 90 associated with two respective nuts 92, all contained inside the half-shells 36, 38. Each bolt 60 (90) has the head in abutment against a projecting annular seat 70 (98) of the half-shell 36 (38), whereas each nut 62 (92) is placed inside a projecting annular seat 72 (94) of the half-shell 36 (38) so that it cannot rotate. The seats 70, 98, 72, 94 are formed in a single piece in the body of the half-shells 36, 38, for example through moulding of plastic or metallic material, from which they are formed.

Both the half-shell 36 and the abutment 39 have an opening 76, 86 towards the inside at the seat 70, 98, on the opposite side to the abutment of the respective bolt, in order to allow the insertion of a tool to rotate the bolt itself. Similarly, the segments 26, 28 also have suitable openings (not shown) at the screws 90 so as to allow the insertion of a tool and the actuation of the screws.

This is how the device 40 works for example for the segments 36, 38.

Once the half-shells 36, 38 have been brought together, the bolts 60, 90 and the nuts 62, 92 are arranged in the relative seats. Holding the half-shells 36, 38 together, the bolts 90 are screwed in so that the ends of the half-shells 36, 38 are far enough apart for them to enter into the segments 26, 28. Then, once the half-shells 36, 38 have been inserted into the segments 26, 28 up to the abutment 39, the bolts 60, 90 are screwed in so as to move apart the half-shells 36, 38 along the axis Y, which corresponds to the vertical axis of the bolts 60 and 90. Consequently, the half-shells 36, 38 are moved apart and the entire outer surface of the half-shells 36, 38 presses against the inner surface of the segments 26, 28, thus blocking any relative movement, without clearance. By doing so the friction and the thrust exerted by the bolts 60, 90, prevent the segments 26, 28 from being able to be separated. The expansion and the perpendicular thrust of the half-shells 36, 38 ensures that the clearance in the segments 26, 28 is cancelled out and thus they (and the others) are prevented from being able to curve downwards. Therefore the liftable rod 24 of the road barrier thus composed always maintains a horizontal position parallel to the ground.

Moreover, the device 40 can adapt itself to any type of segment, with it being sufficient to adjust the distance between the half-shells 36, 38 thereof.

It should be noted that another advantage is the possibility of screwing/adjusting the bolts after installation to recover the possible slight bending of the rods and/or a clearance created over time.

According to the invention it is possible to provide other mechanisms for the expansion of the half-shells, technically different but performing the same function. For example, one can use a lever hinged on a half-shell and having a cam in contact with the other half-shell. The movement of the lever makes the cam rotate, which pushes the opposite half-shell in expansion.

## Claims

1. Device (40) for connecting and locking two segments (26, 28) that form part of a hollow rod (24) used in road barriers, **characterised in that** it comprises mechanical means with variable geometry comprising two surfaces (36, 38) that are adjustably movable relative to one another for engaging the ends of the two segments, thus rigidly locking them and joining them together.

2. Device according to claim 1, wherein the means with variable geometry comprise clamp means adapted for rigidly clamping the ends of the two segments to be joined from the outside.

3. Device according to claim 1, wherein, being the two segments to be joined hollow on the inside, the means with variable geometry comprise expansion means (36, 38) adapted for engaging in expansion the inner surface of said cavities to rigidly lock together the two segments (26, 28).

4. Device according to claim 3, wherein the expansion means comprise
two movable members (36, 38) able to be simultaneously inserted in the cavities of the two segments and
adjustment means (60, 90) adapted for connecting the two movable members and adjusting the relative distance thereof.

5. Device according to claim 4, wherein each of the two movable members comprises two half-shells (36, 38) the profile of which that in use comes into contact with an inner surface of said cavity reproduces that of the latter in a substantially complementary manner.

6. Device according to claim 4 or 5, wherein the adjustment means comprise a threaded member (60, 90) that is mounted
- so as to push on one of the movable members (36, 38) and
- engaged on a corresponding female screw member (62, 92) adapted for pushing the other movable member in the opposite direction.

7. Device according to claim 6, wherein one of the movable members comprises, in a single piece, an abutment housing (70, 98) for an end of the threaded member and the other movable member comprises an abutment housing (72, 94) for the corresponding female screw member.

8. Device according to one of claims 4 to 7, wherein the adjustment means comprise a bolt and a nut mounted in thrust action between the two movable members.

9. Device according to claim 8, wherein the abutment housing for the bolt is shaped so as to prevent rotation thereof with respect to the respective movable member.

10. Device according to claim 8 or 9, wherein the movable member on which the bolt acts to push has an opening to leave the head of the bolt uncovered towards the outside.

11. Device according to one of claims 4 to 7, wherein the adjustment means comprise a cam-operated lever mechanism in which a cam is adapted for acting in thrust action between the two movable members to make them move apart.

12. Device according to claims 2 or 3, wherein the mechanical means with variable geometry are configured to move the movable surfaces along an axis transversal to a longitudinal axis of the segments.

13. Rod made up of at least one pair of segments comprising a device for interconnecting and locking the segments, wherein said device is made according to one of the previous claims.
